(19) **Europäisches Patentamt**

**European Patent Office**

**Office européen des brevets**

(11) **EP 0 886 489 B1**

(12) **EUROPÄISCHE PATENTSCHRIFT**

(45) Veröffentlichungstag und Bekanntmachung des Hinweises auf die Patenterteilung:
**14.08.2002 Patentblatt 2002/33**

(51) Int Cl.7: **A61B 5/107**

(21) Anmeldenummer: **97914107.4**

(86) Internationale Anmeldenummer:
**PCT/DE97/00193**

(22) Anmeldetag: **28.01.1997**

(87) Internationale Veröffentlichungsnummer:
**WO 97/27803 (07.08.1997 Gazette 1997/34)**

(54) **VERFAHREN ZUM BERÜHRUNGSLOSEN ERMITTELN DER ABMESSUNGEN EINES MENSCHLICHEN KÖRPERS UND DER AUSWERTUNG DER ERMITTELTEN ABMESSUNGEN, SOWIE VORRICHTUNG ZUR ERMITTLUNG DER ABMESSUNGEN UND DEREN WEITERVERARBEITUNG**

METHOD FOR THE CONTACTLESS DETERMINATION OF DIMENSIONS OF A HUMAN BODY AND EVALUATION OF THE DIMENSIONS DETERMINED, AND DEVICE FOR DETERMINING THE DIMENSIONS AND FURTHER PROCESSING THEM

PROCEDE DE DETERMINATION SANS CONTACT DES MENSURATIONS D'UN CORPS HUMAIN ET D'EVALUATION DES MENSURATIONS OBTENUES, ET DISPOSITIF PERMETTANT DE DETERMINER LESDITES MENSURATIONS ET DE LES EXPLOITER

(84) Benannte Vertragsstaaten:
**DE GB IT**

(30) Priorität: **30.01.1996 DE 19603236**

(43) Veröffentlichungstag der Anmeldung:
**30.12.1998 Patentblatt 1998/53**

(73) Patentinhaber: **Puls, Hermann**
**21394 Kirchgellersen (DE)**

(72) Erfinder: **Puls, Hermann**
**21394 Kirchgellersen (DE)**

(74) Vertreter:
**Schupfner, Gerhard D., Dr. Dipl.-Chem. et al**
**Müller, Schupfner & Gauger,**
**Patentanwälte,**
**Postfach 1753**
**21236 Buchholz (DE)**

(56) Entgegenhaltungen:
**DE-A- 3 638 525     DE-B- 1 034 375**
**GB-A- 692 923**

**Beschreibung**

Die Erfindung bezieht sich auf ein Verfahren zum berührungslosen Ermitteln der Abmessungen eines menschlichen Körpers und zum Auswerten der ermittelten Abmessungen, insbesondere für das Anfertigen von Bekleidungen nach dem Oberbegriff des Anspruches 1.

Ein Verfahren zum berührungslosen Ermitteln der Abmessungen eines menschlichen Körpers für das Anfertigen von Bekleidungen ist aus der GB-A- 692923 bekannt. Dieses Verfahren dient der Anfertigung von Maßkonfektion von Bekleidung. Bei dem Verfahren wird eine Person in eine Spiegelanordnung an eine vorgegebene Stelle gestellt. Übertragungsspiegel spiegeln das Abbild der Person von vorn und von zwei Seiten unter Berücksichtigung der Gesetzmäßigkeit -Einfallwinkel gleich Ausfallwinkel- auf eine Photokamera. Es sind zwei Blitzgeräte vorgesehen, die die Person von zwei entgegengesetzten Seiten von vorn anblitzen. Infolge einer Überstrahlung werden die auf die Kamera gespiegelten Bilder in den Konturen nicht ausreichend scharf und genau. Da die Blitzgeräte nicht absolut gleichzeitig blitzen, ergeben sich durch Bewegungen der Person Meßfehler. Diese Meßfehler werden mit Hilfe eines Überkopfspiegels kompensierbar gemacht, der ein Korrekturbild über die Abbildungen setzt. Vom Negativbild wird ein fotoempfindliches Papier belichtet, das in einem Korrekturrahmen gehalten wird. Mit Hilfe des Korrekturrahmens wird das fotoempfindliche Papier vor seiner Belichtung so verstellt, daß die Bewegungsfehler der Person kompensiert werden sollen.

Aus der DE 10 34 375 B ist bei zwei aufeinander folgenden Belichtungen an die Person eine individuelle Bemaßung anzulegen.

Es ist Aufgabe der Erfindung, ein Verfahren der eingangs erwähnten Art zum berührungslosen Ermitteln der Abmessungen einer Person zu schaffen, aus denen sich durch Umrechnung genaue Maße für Kleidung und das Feststellen der Körperhaltung ergeben. Die gestellte Aufgabe ist erfindungsgemäß gelöst mittels eines im Kennzeichen des Anspruches 1 beschriebenen Verfahrens.

Dieses Verfahren hat den Vorteil, daß zeitlich gesehen nur eine Abbildung erstellt wird, die sich aus mehreren Einzelabbildungen zusammensetzt. Während dieser einen Abbildung kann sich die Person zwar bewegen bzw. ihre Körperhaltung ändern; die Änderung macht sich aber bei allen Teil- oder Einzelabbildungen immer in gleicher Weise, also koordiniert bemerkbar. Für die Gesamtabbildung hat die Person nur eine Körperhaltung und damit feste, zueinander passende Abmessungen. Ein weiterer Vorteil besteht in dem Anbringen individuell angepaßter Linien. Solche individuell angepaßten Linien bedürfen gegenüber starren Linienmustern der bekannten Art keiner Interpolationen zwischen Linie und anzulegender Maßstelle. Die Linie liegt, richtig angepaßt, genau deckend über der Maßstelle. Maßfehler oder - ungenauigkeiten sind damit eliminiert.

Nach der Erfindung ist vorgesehen, daß die Linien beim Anlegen an den menschlichen Körper an für ihn charakteristischen Bereichen vorgesehen werden. Es hat sich gezeigt, daß es gewisse Formgestaltungen gibt, die sich aus charakteristischen Bereichen ergeben bzw. ableiten lassen. Das Ausmessen einer Person, läßt sich damit also vereinfachen.

Nach einer weiteren Ausgestaltung der Erfindung ist vorgesehen, daß die Linien beim Anlegen an den menschlichen Körper an seinen charakteristischen Mittellinien, Höhenlinien und Randlinien orientiert werden. So werden zur Ermittlung der Körpermaße einer Person bevorzugt die Abstände Körpermittellinie-Vorderlinie, Körpermittellinie-Rückenlinie, Körpermittellinie-Achsellinien, Körperhöhenmittellinie-Ärmellängenlinie und Beinlängenlinie herangezogen. Bis zu beispielsweise einhundert weitere Meßdaten können ohne Schwierigkeiten in die Betrachtung einbezogen werden.

Eine Vorrichtung zur Durchführung des Verfahrens ist gekennzeichnet durch eine winkelabhängige, feststehende Spiegelanordnung um den Gegenstand herum, wobei die vorgesehenen Spiegel so angeordnet sind, daß sie den Gegenstand wenigstens von vorn und von der Seite abbilden und die Abbildungen gegebenenfalls über weitere Übertragungsspiegel auf die eine Abbildungsfläche in einem einzigen optischen Aufnahmegerät projizieren. Mittels der Spiegel werden damit also in der Momentaufnahme gleichzeitig mehrere Teilabbildungen der Person hergestellt, die dann durch Reflektion auf die einzig vorhandene Abbildungsfläche projiziert und dort wieder vereinigt werden.

Nach der Erfindung ist vorgesehen, daß die Spiegel und die Übertragungsspiegel die von ihnen abgebildeten Ansichten der Person von vorn und von zwei Seiten unter Berücksichtigung der Gesetzmäßigkeit -Einfallwinkel gleich Ausfallwinkel- auf ein photooptisches oder/und optoelektronisches Aufnahmegerät übertragen. Eine Abwandlung dieser Ausführungsform ist in der Weise möglich, daß die Spiegel und die Übertragungsspiegel die von ihnen abgebildeten Ansichten der Person von vorn und von einer Seite unter Berücksichtigung der Gesetzmäßigkeit -Einfallwinkel gleich Ausfallwinkel- auf ein photooptisches oder/und optoelektronisches Aufnahmegerät übertragen. Aufgrund dieser Gesetzmäßigkeit lassen sich die einzelnen Ansichten der Person auf einfache Weise zu der einen Abbildungsfläche zusammenführen, wobei nach einer weiteren Ausgestaltung der Erfindung vorgesehen ist, daß die Spiegel die Person nebeneinander auf die Abbildungsfläche des Aufnahmegerätes übertragen. Je nach dem Einsatzort der Vorrichtung wird das Aufnahmegerät auf photooptischem Wege oder optoelektronisch arbeiten.

Nach einer weiteren Ausgestaltung der Erfindung ist vorgesehen, daß insbesondere im Falle eines optoelektronischen Aufnahmegerätes die auf seiner Abbildungsfläche durch Spiegeln abgebildete Person elektronisch an eine die Abbildungen auswertende Datenverarbeitungsvorrichtung weitergeleitet wird.

Nach einer weiteren Ausgestaltung der Erfindung ist vorgesehen, daß die Spiegel eine menschliche Person aufrecht auf einer Plazierstelle stehend abbilden, wobei die Plazierstelle der Person mittels einer Anschlagvorrichtung innerhalb der Spiegelanordnung vorgegeben ist. Dies ist vorteilhaft, wenn eine gleichmäßige Verteilung der Ansichten auf der Abbildungsfläche erfolgen soll. Mit Hilfe des Verfahrens und der Vorrichtung nach der Erfindung wird photooptisch oder optoelektronisch eine Formmaßpalette angeboten, die für die Maßkonfektion ein Bindeglied zwischen Handel und Industrie bildet. Die wirtschaftliche Bedeutung ist groß. 50 bis 70% der heute angebotenen Herrenoberbekleidung paßt nicht und muß individuell geändert werden. Durch den Einsatz des Verfahrens und der Vorrichtung nach der Erfindung wird eine eheliche Verbesserung der Paßform erreicht. Änderungskosten fallen weg. Das Lagerrisiko wird verringert. Mittels einer Datenverarbeitungsanlage lassen sich die optoelektronisch aufgenommenen Meßwerte in Maße umwandeln und sogleich in den Änderungsprozeß oder die Beurteilung zum Einleiten gezielter klinischer Maßnahmen einführen.

Die Erfindung wird anhand der Zeichnung näher erläutert: Es zeigen:

Fig. 1 eine Draufsicht auf eine Spiegelanordnung, mittels der mit nur einem einzigen Aufnahmeschuß drei Ansichten einer Person auf einer Abbildungsebene verwirklicht werden,
Das Ausführungsbeispiel gemäß Fig. 1 fällt nicht unter den Anspruch 1.

Fig. 2 die mit einer Spiegelanordnung nach Fig. 1 aufgenommenen, bereits aufgearbeiteten Ansichten der Person mit individuell zugeordneten Linien,

Fig. 3 die Abbildung einer Umfangslinie mit Abmessungen einer auszumessenden Person,

Fig. 4 eine Draufsicht auf eine Spiegelanordnung nach der Erfindung, mittels der mit nur einem einzigen Aufnahmeschuß zwei Ansichten einer Person auf einer Abbildungsebene verwirklicht werden,

Fig. 5 die bereits aufgearbeiteten Ansichten der mit der Spiegelanordnung nach Fig. 4 aufgenommenen Person mit individuell zugeordneten Linien.

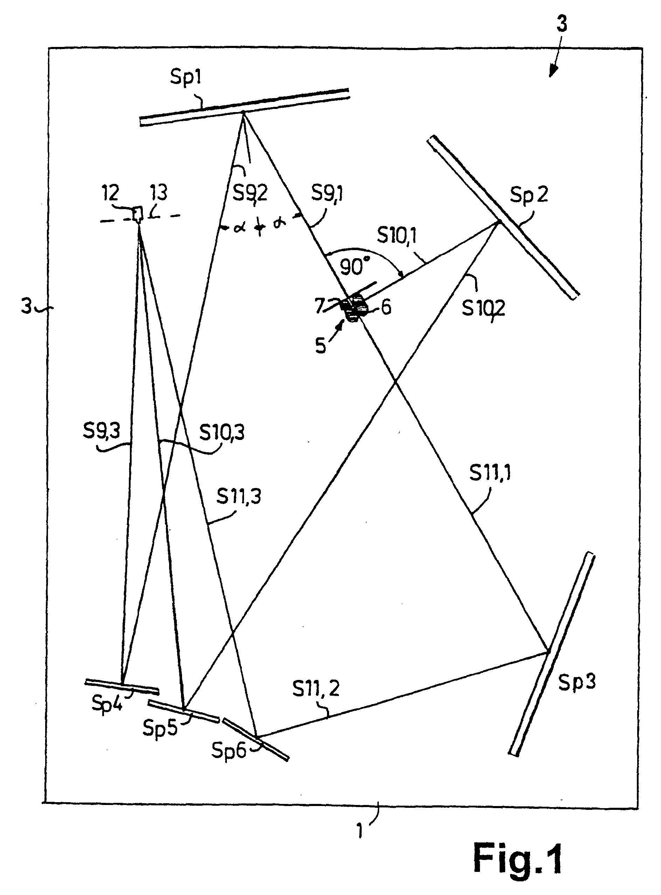

Fig. 1 zeigt einen mittels einer Begrenzungslinie 1 angedeuteten beispielsweise als Meßkabine dienenden Raum, in dem sich eine Vorrichtung 3 zum Ermitteln der Abmessungen einer zu bekleidenden Person P befindet. Die Vorrichtung dient aber außer dem Ausmessen einer Bekleidung auch der Feststellung der Körperhaltung. Anhand der durch das Ausmessen gewonnenen Daten können medizinisch-klinisch notwendige Gesundungsmaßnahmen festgelegt werden. Wenn bei der nun beschriebenen Vorrichtung die ermittelten Maße nur in Bezug auf zur Herstellung von Bekleidung besprochen werden, so gilt dies gleichermaßen auch für die Feststellung der Körperhaltung, die Aufschluß darüber geben kann, ob und welche Maßnahmen medizinischer oder klinischer Art zu erwägen sind.

Das Ausführungsbeispiel der Figur 1 fällt nicht unter den Wortlaut des Anspruchs 1. Dieses Beispiel enleichtert jedoch das Verständnis des beanspruchten Verfahrens.

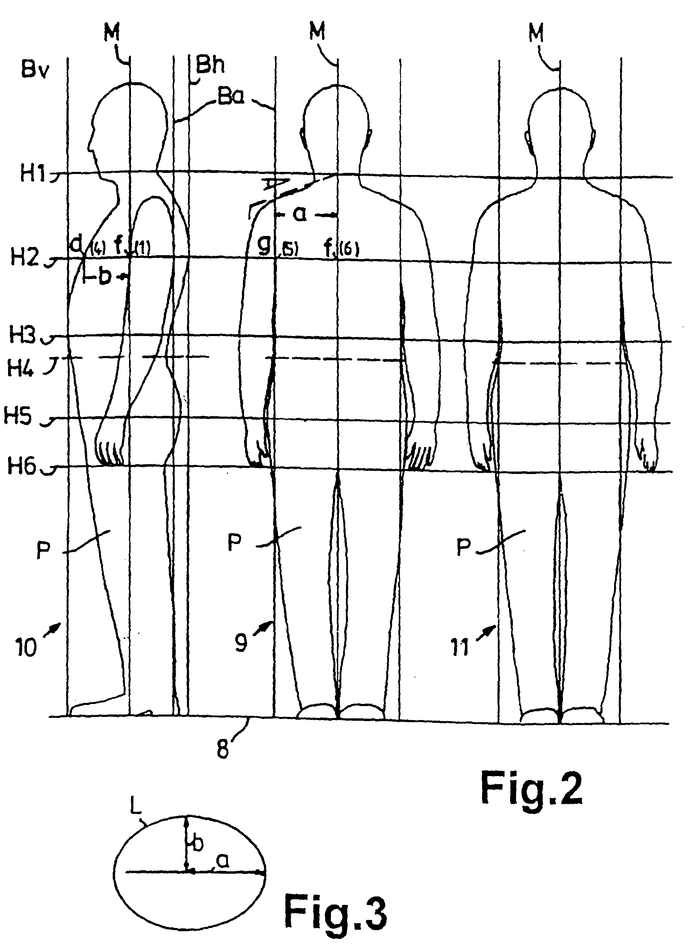

In Fig. 1 sind von der Person an der Plazierstelle 5, an der sie zu stehen hat, nur die Fußabdrücke 6 dargestellt, die an eine Richtschiene 7 angesetzt sind. Die Person P steht auf dem Fußboden 8 (Fig. 2), an dem auch die Richtschiene 7 befestigt ist. An dem Fußboden 8 sind Abbildungsspiegel Sp 1, Sp 2, Sp 3 und Übertragungsspiegel Sp 4, Sp5, Sp 6 angeordnet. Die Abbildungsspiegel haben eine Höhe von ca. 2,00 m und etwa eine Breite von ca. 0,90 m. Die Spiegel sind so angeordnet, daß die Person P auf ihnen von hinten, von einer Seite und von vorn abgebildet wird. Diese auf den Spiegeln erscheinenden Abbildungen 9, 10, 11 (in Fig. 2 bereits durch Nachbehandlung aufgearbeitet) werden auf ein Aufnahmegerät 12, beispielsweise eine Kamera, gespiegelt. Die Kamera kann auf herkömmliche Weise photooptisch oder in fortgeschrittener Bauweise optoelektronisch arbeiten. Mit einem Aufnahmeschuß werden alle drei Abbildungen 9, 10, 11 auf der Abbildungsfläche 13 der Kamera nebeneinander abgebildet, wie es aus Fig. 2 zu ersehen ist. In Fig. 2 sind die Abbildungen 9, 10, 11 als Umrißbilder stilisiert aufgearbeitet dargestellt.

Alle Spiegel sind so aufgestellt, daß sie nach dem Gesetz von Einfallwinkel $\alpha$ gleich Ausfallwinkel $\alpha$ die Abbildungen zur Kamera 12 spiegeln. So wird beispielsweise die Vorderabbildung 9 durch Brechung an den Spiegeln Sp3 und Sp6 jeweils um 2 x $\alpha$ über die Strahlengänge S11,1; S11,2; S11,3 auf die Abbildungsebene 13 projiziert. Für die Seitenabbildung 10 sind dies die Spiegel. Sp 2 und Sp5 mit den Strahlengängen S10,1; S10,2; S10,3. Für die Rückenabbildung 11 sind dies die Spiegel Sp1 und Sp4 mit den Strahlengängen S9,1; S9,2; S9,3. Die Strahlengänge S9,1 und S10,1 stehen jeweils um 90° senkrecht zueinander und verlaufen entweder senkrecht zu der Richtschiene 7 (Strahlengänge S9,1; S11,1) oder parallel zu der Richtschiene 7 (Strahlengang S 10,1).

In Fig.2 sind an die Umrißbilder 9, 10, 11, die durch eine nicht näher erläuterte elektronische Aufbereitung aus den optisch aufgenommenen Bildern gebildet sind, durch eine weitere elektronische Nachbehandlung Linien eines Linienmusters angelegt. Die Linien entsprechen keinem starren Raster; sie sind individuell an die Abbildungen 9, 10, 11 angepaßt. Die Linien sind auf für die Bemaßung charakteristische Körperbereiche gelegt. Zunächst sind es vertikale Mittellinien M und Höhenlinien H. Eine Höhenlinie H1 markiert den Nackenbereich. Eine Höhenlinie H2 markiert die mittlere Brusthöhe. Eine Höhenlinie H3 markiert die Bauchhöhe. Eine Höhenlinie H4 markiert die Hüfthöhe. Eine Höhenlinie H5 markiert die Gesäßhöhe oder Ärmellängenhöhe. Eine Höhenlinie H6 markiert die Fingerspitzenhöhe. Weitere Linien sind die vordere und die hintere vertikale Begrenzungslinie Bv und Bh sowie die Armlinie Ba. Über diese Linien werden die für die Bekleidung erforderlichen Maße ermittelt. Da alle drei Abbildungen 9, 10, 11 in einem Aufnahmeschuß gebildet sind, sind so alle Maße an allen Abbildungen auf die Person P zugeschnitten.

Die Längenmaße der Abbildungen sind aus den Abbildungen 9,10,11 abgreifbar und werden in Körpermaße umgerechnet. Dies läßt sich besonders einfach durchführen unter Zuhilfenahme der unten angegebenen Gleichungen. Nimmt man beispielsweise im Brustbereich an, daß von dem Punkt d (4) der Person P zur Mittellinie M mit dem Punkt f(1) ein Abstand b (Abbildung 10, Fig.2) vorliegt und daß von dem Punkt f (6) an der Mittellinie M zum Punkt g (5) an der Achsellinie Ba ( Abbildung 9, Fig.2) ein Abstand a meßbar ist, dann läßt sich die Körpermaßlänge im Brustumfang errechnen. In Fig.3 ist die Brustumfangslinie L der auszumessenden Person P schematisch dargestellt zur Erläuterung der senkrecht aufeinander stehenden Abstandslinien a und b. Die Errechnung erfolgt mit folgender Gleichung:

$$L = 2 \cdot \pi \cdot a \cdot \left[ 1 - \left( \frac{1}{2} \right)^2 \cdot e^2 - \left( \frac{1 \cdot 3}{2 \cdot 4} \right) \cdot \frac{e^4}{3} - \left( \frac{1 \cdot 3 \cdot 5}{2 \cdot 4 \cdot 6} \right)^2 \cdot \frac{e^6}{5}, \right]$$

wobei sich die in der Formel enthaltenen Parameter ergeben aus:

$$c = \sqrt{a^2 - b^2}$$

$$e = \frac{\sqrt{a^2 - b^2}}{a} = \frac{c}{a}$$

Bei einem Abbruch der unendlichen Formel an der angegebenen Stelle ergibt sich ein völlig unbedeutender Fehler in der Größenordnung von

$$\frac{3}{16000} \cdot e^8$$

Die Rechnung läßt sich vereinfachen durch die Näherungsformel:

$$L = \pi \cdot (a+b) \cdot \frac{64 - 3\lambda^4}{64 - 16\lambda^2}$$

wobei sich der Parameter λ ermitteln läßt als

$$\lambda = \frac{a-b}{a+b}$$

Auf diese Weise lassen sich die Längenmaße der Körperabbildungen 9, 10 in Körpermaße umrechnen.

Diese Umrechnung erfolgt in diesem Fall über ein Datenverarbeitungsgerät mit einer speziellen Computersoftware und kann dann absolut genau automatisch an die Schnittkonstruktion des Kleiderherstellers übertragen werden.

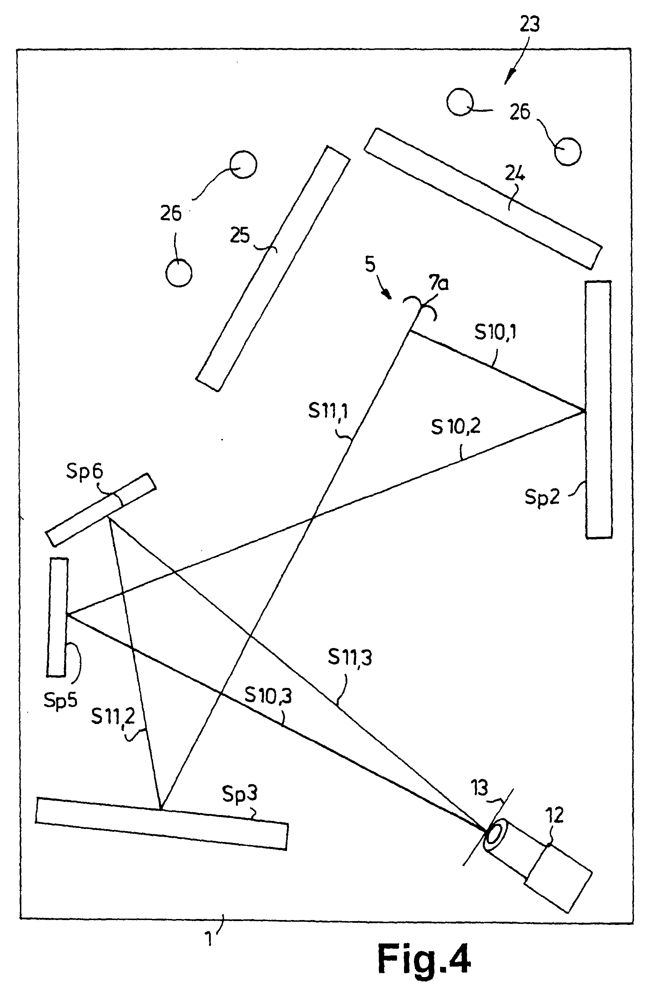

Fig. 4 zeigt den mittels der Begrenzungslinie 1 angedeuteten beispielsweise als Meßkabine dienenden Raum, in dem sich eine abgewandelte Vorrichtung 23 zum Ermitteln der Abmessungen einer zu bekleidenden Person P befindet. Auch hier gilt als weiterer Anwendungszweck die Ermittlung der Körperhaltung. Es sind hinter und neben der auszumessenden Person P lichtdurchlässige, matte Rückwandflächen 24 und 25 vorgesehen, die von Lichtquellen von hinten angestrahlt werden. Damit entsteht ein sauberer Hintergrund.

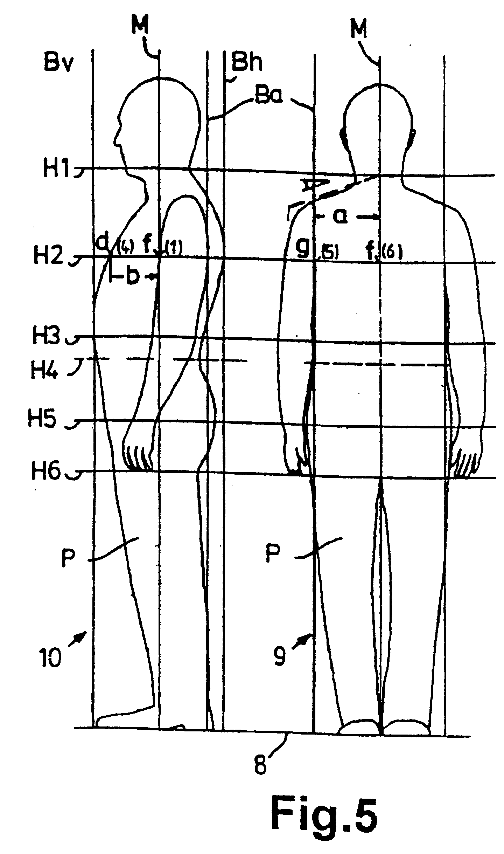

In Fig. 4 ist von der Person an der Plazierstelle 5, an der sie zu stehen hat, nur die die Plazierstelle der Absatzhinterkanten vorgebende Richtschiene 7a dargestellt. Die Person P steht auf dem Fußboden 8 (Fig. 5), an dem auch die Richtschiene 7a befestigt ist. An dem Fußboden 8 sind Abbildungsspiegel Sp 2, Sp 3 und Übertragungsspiegel Sp 5, Sp 6 angeordnet. Die Abbildungsspiegel Sp2,Sp3 haben eine Höhe von ca. 2,00 m und etwa eine Breite von ca. 0,90 m. Die Spiegel sind so angeordnet, daß die Person P auf ihnen von vorn und von einer Seite abgebildet wird. Diese auf den Spiegeln erscheinenden Abbildungen 9, 10 werden auf ein Aufnahmegerät 12, beispielsweise eine optoelektronische Aufnahmevorrichtung, gespiegelt. Mit einem Aufnahmeschuß werden beide Abbildungen 9, 10 auf der Abbildungsfläche 13 der optoelektronischen Aufnahmevorrichtung 12 nebeneinander abgebildet, wie es aus Fig. 4 zu ersehen ist. In Fig. 4 sind die Abbildungen 9, 10 als Umrißbilder stilisiert aufgearbeitet dargestellt.

Alle Spiegel sind so aufgestellt, daß sie nach dem Gesetz von Einfallwinkel $\alpha$ gleich Ausfallwinkel $\alpha$ die Abbildungen zur optoelektronischen Aufnahmevorrichtung 12 spiegeln. So wird beispielsweise das Vorderbild 9 durch Brechung an den Spiegeln Sp3 und Sp6 jeweils um 2 x $\alpha$ über die Strahlengänge S11,1; S11,2; S11,3 auf die Abbildungsebene projiziert. Für die Seitenabbildung 10 sind dies die Spiegel Sp 2 und Sp5 mit den Strahlengängen S10,1; S10,2; S10,3. Die Strahlengänge S10,1; S11,1 stehen jeweils um 90° senkrecht zueinander.

In Fig. 5 sind an die Umrißbilder 9, 10, die durch eine nicht näher erläuterte elektronische Aufbereitung aus den optisch aufgenommenen Bildern gebildet sind, durch eine weitere elektronische Nachbehandlung Linien eines Linienmusters angelegt. Die Linien entsprechen keinem starren Raster; sie sind individuell an die Abbildungen 9, 10 angepaßt. Die Linien sind wieder auf für die Bemaßung charakteristische Körperbereiche gelegt. Zunächst sind es vertikale Mittellinien M und Höhenlinien H. Eine Höhenlinie H1 markiert den Nackenbereich. Eine Hohenlinie H2 markiert die mittlere Brusthöhe. Eine Höhenlinie H3 markiert die Bauchhöhe. Eine Höhenlinie H4 markiert die Hüfthöhe. Eine Höhenlinie H5 markiert die Gesäßhöhe oder Ärmellängenhöhe. Eine Höhenlinie H6 markiert die Fingerspitzenhöhe. Weitere Linien sind die vordere und die hintere vertikale Begrenzungslinie Bv und Bh sowie die Armlinie Ba. Über diese Linien werden die für die Bekleidung erforderlichen Maße ermittelt. Da beide Abbildungen 9, 10 in einem Aufnahmeschuß gebildet sind, sind so alle Maße an beiden Abbildungen auf die Person P zugeschnitten.

Die Längenmaße der Abbildungen sind aus den Abbildungen 9,10 abgreifbar und werden in Körpermaße umgerechnet. Dies läßt sich besonders einfach durchführen unter Zuhilfenahme der Gleichungen, die zu dem Beispiel nach den Fig. 1 bis 3 aufgeführt sind. Um Wiederholungen zu vermeiden, wird auf die Ausführungen zu den Fig. 1 bis 3 verwiesen. Diese Umrechnung erfolgt auch in diesem Fall über ein Datenverarbeitungsgerät mit einer speziellen Computersoftware und kann dann absolut genau elektronisch an die Schnittkonstruktion des Kleiderherstellers oder an die Klinik übertragen werden. Es hat sich bei der optoelektronischen Aufbereitung gezeigt, daß beim Einsatz von beleuchteten Hintergrundflächen 24 und 25 zwei Spiegelungen für eine einwandfreie Maßermittlung völlig ausreichend sind.

## Patentansprüche

1. Verfahren zum berührungslosen Ermitteln der Körpermaße und der Körperhaltung eines menschlichen Körpers (P) und zum Auswerten der ermittelten Abmessungen, wobei von verschiedenen Seiten Lichtstrahlen (S10,S11) auf einen menschlichen Körper (P) ausgesandt und dabei gewonnene Abbildungen (9,10) des menschlichen Körpers (P) mittels Spiegeln (Sp2,Sp3, Sp5,Sp6) auf eine einzige Abbildungsfläche (13) eines Aufnahmegerätes (12) geleitet werden, wonach alle Abbildungen (9,10) auf dieser einzigen Abbildungsfläche (13) mit den Abbildungen (9,10) individuell angepaßter, der Bemaßung dienender Hilfslinien (M,H,Bv,Bh,Ba) versehen werden, **dadurch gekennzeichnet, daß** *die Lichtstrahlen (S10,S11) von lichtdurchlässigen, matten Rückwandflächen (24,25), die vom Aufnahmegerät (12) aus gesehen hinter und neben der Person (P) angeordnet sind, ausgehen* und dass die dabei von den Lichtstrahlen (S10,S11) gebildeten Abbildungen (9,10) der Person (P) als Umrißbilder über die Spiegel (Sp2,Sp3, Sp5,Sp6) auf die Abbildungsfläche (13) des Aufnahmegerätes (12) *zeitlich deckungsgleich in einem Aufnahmemoment abbildungstechnisch erfaßt* gespiegelt werden, wonach an den Abbildungen der Person (P) auf der Abbildungsfläche (13) Maße abgegriffen werden und zwar in verschiedenen Höhen (H1-H6), als von einer vertikalen Mittellinie (M) ausgehende, senkrecht zueinander verlaufende Abstände a, b zu einer jeweiligen Umfangslinie (L), und daß die Umfangslinien (L) für die verschiedenen Höhen (H1-H6) dann aus den Abständen a, b mittels der mathematischen Formel der kubischen Parabel als Körpermaß errechnet werden mittels der Gleichung:

$$L = 2 \cdot \pi \cdot a \cdot \left[ 1 - \left( \frac{1}{2} \right)^2 \cdot e^2 - \left( \frac{1 \cdot 3}{2 \cdot 4} \right) \cdot \frac{e^4}{3} - \left( \frac{1 \cdot 3 \cdot 5}{2 \cdot 4 \cdot 6} \right)^2 \cdot \frac{e^6}{5} \dots \right]$$

in der sich der Wert e aus der Gleichung:

$$e = \frac{\sqrt{a^2 - b^2}}{a}$$

ergibt.

**2.** Verfahren nach Anspruch 1, **dadurch gekennzeichnet, daß** die Errechnung der Umfangslinien (L) in den verschiedenen Höhen (H1-H6) aus den Abständen a und b vereinfacht mittels der Gleichung:

$$L = \pi \cdot (a + b) \cdot \frac{64 - 3\lambda^4}{64 - 16\lambda^2}$$

erfolgt, wobei sich der Parameter $\lambda$ ermitteln läßt als

$$\lambda = \frac{a - b}{a + b}$$

**3.** Verfahren nach Anspruch 1, **dadurch gekennzeichnet, daß** in den durch die Höhenlinien (H1-H6) angegebenen Körperhöhen einer Person (P) bevorzugt die Abstände b Körpermittellinie (M)-Vorderlinie (Bv), die Abstände Körpermittellinie (M)-Rückenlinie (Bh), die Abstände a Körpermittellinie (M)-Achsellinien (Ba), die Abstände Körperhöhenmittellinie (H2)-Ärmellängenlinie (H5) und die Beinlängen (H6) ermittelt werden.

**4.** Vorrichtung zur Durchführung des Verfahrens nach den Ansprüchen 1 bis 3, mit einer winkelabhängigen, feststehenden Spiegelanordnung um eine Plazierstelle (5) herum, wobei auf einen menschlichen Körper (P) Lichtstrahlen (S10,S11) ausgesandt und dabei gewonnene Abbildungen (9,10) des menschlichen Körpers (P) mittels Spiegeln (Sp2,Sp3, Sp5,Sp6) auf eine einzige Abbildungsfläche (13) eines Aufnahmegerätes (12) leitbar sind, **gekennzeichnet durch** lichtdurchlässige, von hinten durchstrahlte, *matte Rückwandflächen* (24,25), die vom Aufnahmegerät (12) aus gesehen hinter und neben der Person (P) angeordnet sind, und **durch** *ein photooptisches oder optoelektronisches Aufnahmegerät* (12).

**5.** Vorrichtung nach Anspruch 4, **gekennzeichnet durch** das Aufnahmegerät (12) und eine die Abbildungen auswertende elektronische Datenverarbeitungsvorrichtung.

**6.** Verwendung des Verfahrens und/oder der Vorrichtung nach einem oder mehreren der Ansprüche 1 bis 5 zur Herstellung von Maßkonfektionen.


**Claims**

**1.** A method for the contactless determination of the body dimensions and the posture of a human body (P) and for evaluating the dimensions determined, whereby light beams (S10, S11) are shone onto a human body (P) from various sides and the resulting images (9, 10) of the human body (P) are redirected to a single imaging surface (13) of a recording apparatus (12) by means of mirrors (Sp2, Sp3, Sp5, Sp6), after which all images (9, 10) on this single imaging surface (13) are provided with the images (9, 10) of individually matching artificial lines (M, H, Bv, Bh, Ba) serving as measurement, **characterised in that** the light beams (S10, S11) radiate from translucent, matt back wall surfaces (24, 25), which are arranged behind and next to the person (P) as viewed from the recording apparatus (12), and **in that** the images (9, 10) of the person (P) thus formed by the light beams (S10, S11) are reflected as outlines by the mirrors (Sp2, Sp3, Sp5, Sp6) onto the imaging surface (13) of the recording apparatus (12) projection technically captured temporarily identical at the recording moment, after which dimensions are callipered on the images of the person (P) on the imaging surface (13) namely at different heights (H1-H6) as distances a, b to each contour line (L) running vertically to one another and radiating from a vertical centre line (M), and **in that** the contour lines (L) for the various heights (H1-H6) are then calculated as a body dimension from the distances a, b by means of the cubic parabola mathematical formula using the equation:

$$L = 2 \cdot \pi \cdot a \left[ 1 - \left( \frac{1}{2} \right)^2 \cdot e^2 - \left( \frac{1 \cdot 3}{2 \cdot 4} \right) \cdot \frac{e^4}{3} - \left( \frac{1 \cdot 3 \cdot 5}{2 \cdot 4 \cdot 6} \right)^2 \cdot \frac{e^6}{5} \cdots \right]$$

in which the value e results from the equation:

$$e = \frac{\sqrt{a^2 - b^2}}{a}$$

2. The method as claimed in Claim 1, **characterised in that** calculating the contour lines (L) at the various heights (H1-H6) from the distances a and b is simplified by means of the equation:

$$L = \pi \cdot (a+b) \cdot \frac{64 - 3\lambda^4}{64 - 16\lambda^2}$$

whereby the parameter $\lambda$ is calculated as

$$\lambda = \frac{a - b}{a + b}$$

3. The method as claimed in Claim 1, **characterised in that** preferably the distances b body centre line (M)-front line (Bv), the distances body centre line (M)-back line (Bh), the distances a body centre line (M) - shoulder lines (Ba), the distances body height centre line (H2)-sleeve length line (H5) and the leg lengths (H6) are determined in the body heights of a person (P) indicated by the contour lines (H1-H6).

4. A device for carrying out the method as claimed in Claims 1 to 3, having a fixed angle-dependent mirror arrangement about a placing position (5), whereby light beams (S10, S11) are shone onto a human body (P) and the resulting images (9, 10) of the human body (P) can be redirected to a single imaging surface (13) of a recording apparatus (12) by means of mirrors (Sp2, Sp3, Sp5, Sp6), **characterised by** translucent, matt back wall surfaces (24, 25) penetrated by radiation from behind, which are arranged behind and next to the from behind, which are arranged behind and next to the person (P) as viewed from the recording apparatus (12), and **characterised by** a photo-optic or optoelectronic recording apparatus (12).

5. The device as claimed in Claim 4, **characterised by** the recording apparatus (12) and an electronic data processing device evaluating the images.

6. Use of the method and/or the device as claimed in any one or more of Claims 1 to 5 for manufacturing tailor -made clothing.


**Revendications**

1. Procédé de détermination sans contact des mensurations corporelles et du maintien corporel d'un corps humain (P) et d'évaluation des mensurations déterminées, des rayons lumineux (S10, S11) étant émis de différents côtés sur un corps humain (P) et les images du corps humain (9, 10) obtenues en l'occurrence étant guidées au moyen de miroirs (Sp2, Sp3, Sp5, Sp6) sur une seule surface d'image (13) d'un appareil de prise de vue (12) après quoi toutes les images (9, 10) sont pourvues sur ladite unique surface d'image (13) de lignes auxiliaires (M, H, Bv, Bh, Ba) adaptées individuellement aux images (9, 10) et servant à la mensuration, **caractérisé en ce que** les rayons lumineux (S10, S11) partent de surfaces de paroi arrière (24, 25) transparentes et mates qui vues depuis l'appareil de prise de vues (12) sont disposées derrière et à côté de la personne (P) et **en ce que** les images (9, 10) formées en l'occurrence par les rayons lumineux (S10, S11) sont renvoyées en tant qu'images à contour via les miroirs (Sp2, Sp3, Sp5, Sp6, sur la surface d'image (13) de l'appareil de prise de vue (12) de façon à être enregistrées simultanément dans un moment de prise de vue par une technique d'image, après quoi on prend des mensurations sur les images de la personne (P) sur la surface d'image (13) et à des hauteurs différentes (H1-H6) en tant que distances a,b relatives à une ligne de contour (L) respective, s'étendant perpendiculairement l'une par rapport à l'autre, partant d'une ligne centrale verticale (M), et **en ce que** les lignes de contour (L) pour les différentes hauteurs (H1-H9) sont alors calculées à partir des distances a, b en tant que mensuration corporelle au moyen de la formule mathématique de la parabole cubique, au moyen de l'équation :

$$L = 2 \cdot \pi \cdot a \cdot \left[ 1 - \left( \frac{1}{2} \right)^2 \cdot e^2 - \left( \frac{1 \cdot 3}{2 \cdot 4} \right) \cdot \frac{e^4}{3} - \left( \frac{1 \cdot 3 \cdot 5}{2 \cdot 4 \cdot 6} \right)^2 \cdot \frac{e^6}{5} \ .... \right]$$

dans laquelle la valeur e résulte de l'équation :

$$e = \frac{\sqrt{a^2 - b^2}}{a}$$

2. Procédé selon la revendication 1, **caractérisé en ce que** le calcul des lignes de contour (L) dans les différentes hauteurs (H1-H6) s'effectue à partir des distances a et b de façon simplifiée au moyen de l'équation :

$$L = \pi \cdot (a+b) \cdot \frac{64 - 3\lambda^4}{64 - 16\lambda^2}$$

Le paramètre λ pouvant être déterminé selon

$$\lambda = \frac{a - b}{a + b}$$

3. Procédé selon la revendication 1, **caractérisé en ce que** dans les hauteurs corporelles d'une personne (P) indiquées par les lignes de hauteur (H1-H6), on détermine de préférence les distances b entre la ligne corporelle centrale (M) et la ligne frontale (Bv), les distances entre la ligne corporelle centrale (M) et la ligne de dos (Bh), les distances a entre la ligne corporelle centrale (M) et les lignes d'aisselle (Ba), les distances entre la ligne centrale de hauteur de corps (H2) et la ligne dé longueur de bras (H5) et les longueurs de jambe (H6).

4. Dispositif d'exécution du procédé selon les revendications 1 à 3, présentant une disposition de miroirs fixe qui est fonction d'angle, autour d'un endroit de placement (5), des rayons lumineux (S10, S11) étant émis sur un corps humain (P) et les images (9, 10) du corps humain obtenues en l'occurrence pouvant être guidées au moyen de miroirs (Sp2, Sp3, Sp5, Sp6) sur une seule surface d'image (13) d'un appareil de prise de vues (12), **caractérisé par** des surfaces de paroi arrière (24, 25) mates, exposées à un rayonnement par l'arrière et transparentes qui vues depuis l'appareil de prises de vue (12) sont disposées derrière et à côté de la personne (P), et par un appareil de prises de vue (12) photooptique ou optoélectronique.

5. Dispositif selon la revendication 4, **caractérisé par** l'appareil de prises de vue (12) et par un dispositif électronique de traitement de données évaluant les images.

6. Utilisation du procédé et/ou du dispositif selon l'une quelconque ou plusieurs parmi les revendications 1 à 5 pour la fabrication de confections sur mesure.

**Fig.1**

EP 0 886 489 B1

Fig.2

Fig.3

11

**Fig.4**

Fig.5